# EUROPÄISCHE PATENTANMELDUNG

(11) **EP 1 415 912 A1**
(43) Veröffentlichungstag der Anmeldung: **06.05.2004**
(21) Anmeldenummer: 03019729.7
(22) Anmeldetag: 29.08.2003
(51) Int. Cl.: B65B 9/22, B65B 59/00

(54) **Formschulter zum Umformen einer Folienbahn**

(30) Priorität: 02.11.2002 DE 10251072
(71) Anmelder: Rovema Verpackungsmaschinen GmbH, 35463 Fernwald (DE)
(72) Erfinder: Kammler, Roman, Dr., 67547 Worms (DE); Kuss, Gerhard, 35584 Wetzlar (DE); Braun, Harald, 35305 Grünberg (DE); Grölz, Horst, 35460 Staufenberg (DE); Baur, Walter, Dr., 63584 Gründau (DE)

(57) **Zusammenfassung**

Um bei einer Formschulter, die zur Umformung einer ebenen, von einer Vorratsrolle (4) abgewickelten Folienbahn (2) zu einem Folienschlauch (7) dient, in einfacher Weise eine Umstellung auf eine andere Bahnbreite vornehmen zu können, wird vorgeschlagen, dass die Formschulter (5) zwei separate Schulterteile (8, 9) zum Aufnehmen der Folienbahn (2) aufweist, und dass eine Verstelleinrichtung (10) zum Verändern und Fixieren eines Abstandes (d) zwischen den Schulterteilen (8, 9) vorgesehen ist.

## Beschreibung

Die Erfindung betrifft eine Formschulter zur Umformung einer ebenen, von einer Vorratsrolle abgewickelten Folienbahn zu einem Folienschlauch.

Formschultem dienen an vertikalen Schlauchbeutelmaschinen der Erzeugung eines vertikal ausgerichteten Folienschlauches. Dieser Folienschlauch wird mittels einer Längsschweißeinrichtung verschweißt, wobei die aufeinander liegenden Ränder der Folienbahn miteinander verbunden werden. Durch Querverschweißungen des Folienschlauches und dessen portionsweise Befüllung werden derart befüllte Schlauchbeutel erzeugt, welche mittels einer Trenneinrichtung vom nach unten beförderten Folienschlauch abgetrennt werden.

Es ist eine Formschulter für eine vertikale Schlauchbeutelmaschine bekannt, die einstückig hergestellt ist. Diese Formschulter ist nur für ein Beutelformat, d. h. für eine bestimmte Folienbreite plus/minus eine bestimmte Bahnbreitentoleranz einzusetzen. Für einen Formatwechsel muss die Formschulter ausgetauscht werden.

Analog dazu sind dreieckige, einteilige Formbleche bekannt, die bei horizontalen Verpackungsmaschinen als Formschulter eingesetzt werden, um einen in horizontaler Richtung weiter bewegten, mittig geknickten, flach zusammengedrückten und oben offenen Folienschlauch zu erzeugen. Der Abstand zwischen einer geraden Folieneinlaufkante und der dem Folienschlauch zugewandten Spitze dieses Dreiecks beschreibt dabei die Umformstrecke für die Folienbahn. Soll die Umformstrecke geändert werden, so muss eine kürzere oder längere Formschulter eingesetzt werden.

Der Erfindung liegt die Aufgabe zugrunde, eine Formschulter für einen größeren Formatbereich vorzusehen, um somit einen Formschulterwechsel bei einem Formatwechsel zu vermeiden.

Gelöst ist die Aufgabe gemäß dem kennzeichnenden Teil des Anspruchs 1. Danach weist die Formschulter zwei separate Schulterteile zum Aufnehmen der Folienbahn auf, und eine Verstelleinrichtung ist dazu vorgesehen, einen Abstand zwischen den Schulterteilen zu verändern und zu fixieren.

Die Erfindung hat den Vorteil, dass ein einfaches Verstellen des Abstandes zwischen den beiden Schulterteilen ausreicht, die Formschulter für eine andere Folienbreite umzurüsten. Ein Austausch der Formschulter gegen eine Formschulter anderer Größe entfällt, wodurch relativ hohe Kosten für diese weitere Formschulter eingespart werden. Die vorgeschlagene Formschulter eignet sich sowohl für vertikale als auch für horizontale Schlauchbeutelmaschinen.

Eine Formschulter beschreibt eine geometrische Möglichkeit, eine gerade Ebene einer abgewickelten Folienbahn in eine gekrümmte Ebene überzuführen. Bei vertikalen Schlauchbeutelmaschinen entspricht letztere einer zylinderförmigen Bahn. Eine dafür geeignete Formschulter ist wesentlich komplizierter (und damit teurer) als eine Formschulter für eine horizontale Schlauchbeutelmaschine, bei welcher letztlich nur ein mittiges Knicken und Umfalten der Folienbahn erfolgt. Insofern ist die vorgeschlagene Formschulter insbesondere für vertikale Schlauchbeutelmaschinen geeignet.

Infolge des Abstandes zwischen den separaten Schulterteilen gibt es an der Formschulter einen entsprechenden Freiraum, der von der über die Formschulter laufenden, unter Zugspannung stehenden Folienbahn passiert wird. Ist der Abstand z. B. gleich 20 mm, so entspricht die Formschulter einer herkömmlichen, einteiligen Formschulter, welche einen Spalt von 20 mm aufweist. Diese Formschulter kann dann z. B. auf einen Abstand zwischen Null und 40 Millimetern eingestellt werden. Diese Einstellbreite hat im allgemeinen für kleinere Formschultem einen kleineren Wert als für größere Formschultern. Durch weitere Verstellmöglichkeiten für die Formschulter kann die Einstellbreite noch vergrößert werden.

Weitere vorteilhafte Ausgestaltungen der vorgeschlagenen Formschulter sind in den Ansprüchen 2 bis 8 beschrieben.

Ist ein Schulterteil ein Einlaufteil und das andere Schulterteil ein die aufeinander liegenden Folienränder an den Folienschlauch abgebendes Auslaufteil (Anspruch 2), so sind zwei sehr wichtige Teile der Formschulter relativ zueinander versetzbar. Das Einlaufteil bestimmt die erste stärkere Umformung der in die Formschulter einlaufenden Folienbahn. Bei einer Formschulter für eine vertikale Schlauchbeutelmaschine (Anspruch 8) ist der Kragen des Einlaufteils für einen guten Folienlauf besonders wichtig. Hier erfolgt eine Umknickung der Folienbahn entlang der gekrümmten Kragenlinie. Das Auslaufteil einer Formschulter einer vertikalen Schlauchbeutelmaschine ist ebenfalls sehr wichtig, da dieses den genauen Verlauf der beiden Folienränder und damit der Längssiegelnaht des Folienschlauches bestimmt.

Weist die Verstelleinrichtung eine Leiste auf, entlang der ein Arretierungsteil feststellbar ist, welches mit einem Schulterteil verbunden ist (Anspruch 3), so kann das Arretierungsteil auf einen Sollwert eingestellt werden, welcher einem bestimmten Beutelformat entspricht. Das Verstellen kann manuell oder motorisch erfolgen. Als Motor eignet sich besonders ein Servomotor, welcher elektronisch aufgrund eines gespeicherten Wertes betrieben wird. Die Leiste kann gerade sein (Anspruch 4). Damit wird eine geradlinige Verstellmöglichkeit der Schulterteile relativ zueinander erreicht. Oder die Leiste beschreibt eine Kurvenbahn, wodurch in Abhängigkeit des Abstandes eine Auslenkung eines Schulterteils in einer Richtung senkrecht zum Abstand möglich ist. Zudem können die Schulterteile relativ zueinander versetzt werden, wenn gemäß Anspruch 6 mindestens ein Schulterteil in eine in Transportrichtung des Folienschlauches ausgerichtete Achse versetzbar ist, und in der versetzten Position arretierbar ist.

Als geteilte Formschulter für eine horizontale Schlauchbeutelmaschine eignet sich ein Schulterteil mit einer planen, konisch zulaufenden Einlaufebene, an welchem eine gerade Folieneinlaufkante vorgesehen ist, in Verbindung mit einem Schulterteil, welches die Form eines Dreiecks hat (Anspruch 7).

Im folgenden wird die Erfindung an Hand Ausführungsbeispiele darstellender Figuren näher beschrieben. Es zeigt:
- Figur 1: in einer Seitenansicht eine vertikale Schlauchbeutelmaschine, mit einer von einer Vorratsrolle abgewickelten Folienbahn, welche mittels einer aus zwei separaten Schulterteilen bestehenden Formschulter zu einem Folienschlauch geformt wird, und mit einer Längssiegeleinrichtung zum Verschweißen des Folienschlauches;
- Figur 2: in einer weiteren Seitenansicht den Gegenstand der Figur 1, jedoch zusätzlich mit einer Quersiegeleinrichtung zum Verschweißen des Folienschlauches quer zu seiner Transportrichtung;
- Figur 3: in einer Seitenansicht mit teilweisem Vertikalschnitt eine Kurvenbahn, welche eine Verstelleinrichtung für ein Schulterteil einer zweiteiligen Formschulter trägt, sowie
- Figur 4: in einer Draufsicht eine aus zwei Schulterteilen bestehende Formschulter einer horizontalen Schlauchbeutelmaschine.

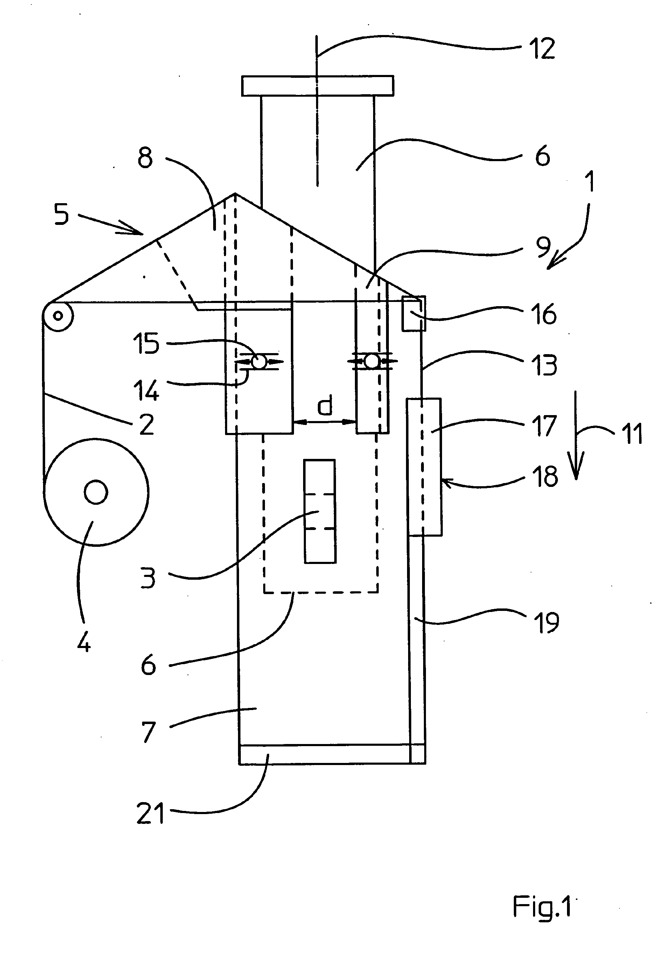

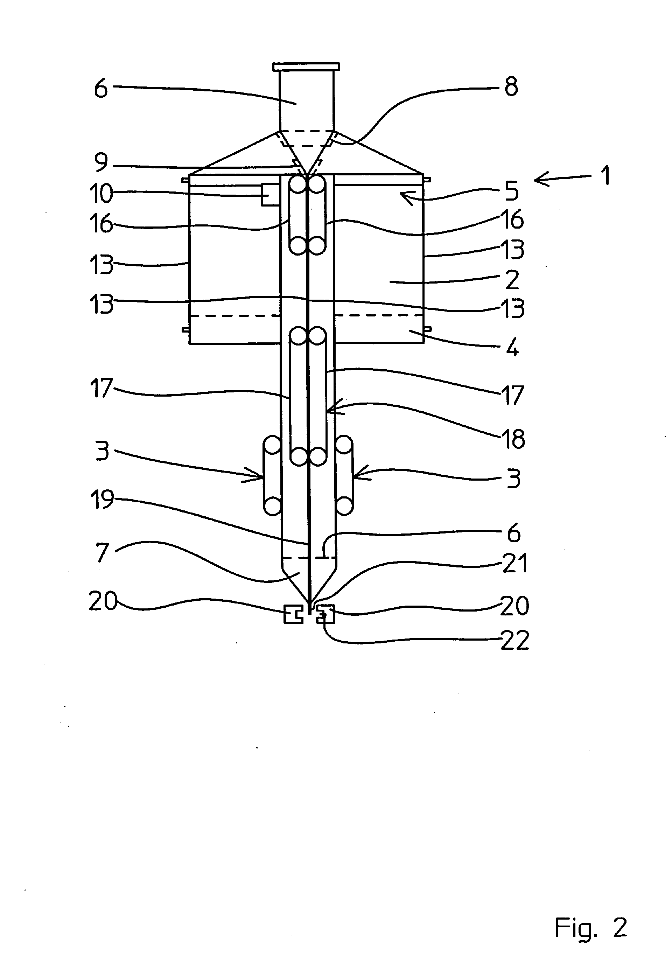

Bei einer vertikalen Schlauchbeutelmaschine 1 wird eine Folienbahn 2 mittels eines Abzugs 3 von einer Vorratsrolle 4 abgewickelt, sowie über eine Formschulter 5 und ein Füllrohr 6 gezogen (Figur 1, Figur 2). Die Formschulter 5 dient einer Umformung der abgewickelten Folienbahn 2 zu einem Folienschlauch 7. Die Formschulter 5 weist zwei separate Schulterteile 8,9 zum Aufnehmen der Folienbahn 2 auf. Eine Verstelleinrichtung 10 ist zum Verändern und Fixieren eines Abstandes (d) zwischen den Schulterteilen 8, 9 vorgesehen.

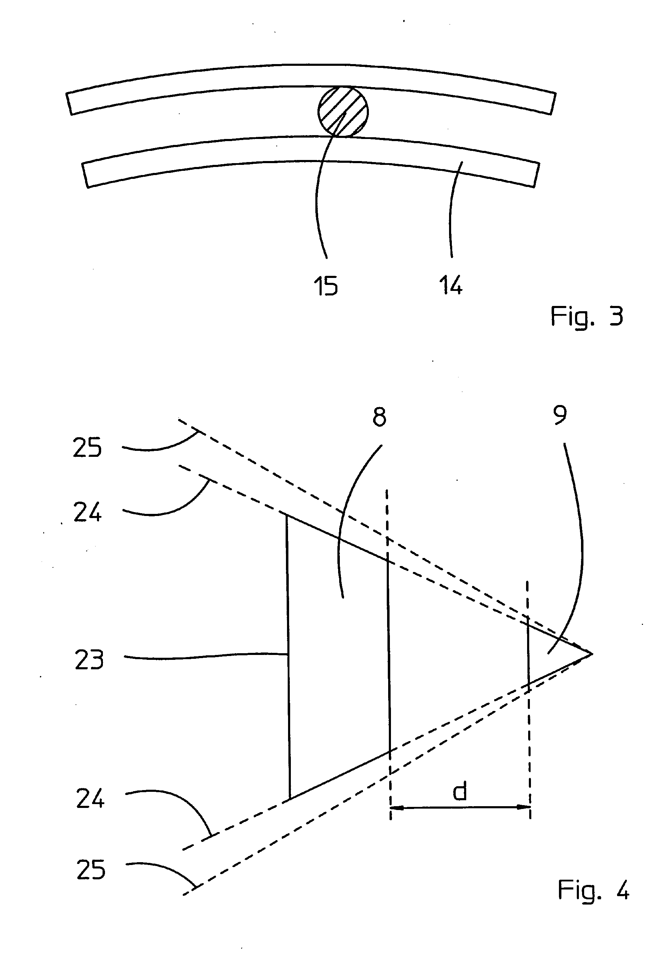

Je nach vorgesehener Folienbreite und Beutelbreite wird der Abstand d so eingestellt, dass die Formschulter 5 von der umzuformenden Folie bedeckt wird. Je größer die Folienbreite ist, umso größer wird der Abstand d eingestellt. Jedes Schulterteil 8, 9 ist zudem in eine in Transportrichtung 11 des Folienschlauches 7 ausgerichtete, vertikale Achse 12, d. h. nach oben oder unten versetzbar und in dieser Position arretierbar, um nach einer Verstellung des Abstandes d eine Feinjustage für einen korrekten Folienlauf vorzunehmen. Das eine Schulterteil 8 ist ein Einlaufteil. Das andere Schulterteil 9 ist ein die aufeinander liegenden Folienränder 13 an den Folienschlauch 7 abgebendes Auslaufteil. Die Verstelleinrichtung 10 weist eine gerade, höhenverstellbare Leiste 14 pro Schulterteil 8, 9 entlang denen jeweils ein mit einem Schulterteil 8, 9 verbundenes Arretierungsteil 15 feststellbar ist. Als Leiste 14 könnte aber auch eine Kurvenbahn analog Figur 3 vorgesehen sein.

Der gebildete Folienschlauch 7 wird portionsweise durch das Füllrohr 6 befüllt. Seine aufeinander liegenden Folienränder 13 werden zwischen gegenläufigen Riemen 16 hindurchgeführt und sodann einer gegenläufige Heißsiegelbänder 17 aufweisenden Längssiegeleinrichtung 18 zugeführt, welche eine verschweißte Längsnaht 19 erzeugt. Gegeneinander bewegbare Quersiegelbacken 20 verschweißen den Folienschlauch 7 quer und erzeugen Quernähte 21. Eine Trenneinrichtung 22 dient einer Abtrennung des befüllten und verschlossenen Schlauchbeutel vom Folienschlauch.

Beim Ausführungsbeispiel der Figur 4 weist das eine Schulterteil 8 eine plane, konisch zulaufende Einlaufebene mit einer geraden Folieneinlaufkante 23 und das andere Schulterteil 9 eine ebene Dreiecksfläche auf. Diese Formschulter 5 ist für ein einfaches mittiges Knicken längs einer Folienbahn an einer horizontalen Schlauchbeutelmaschine vorgesehen. Der Abstand d zwischen den Schulterteilen 8, 9 kann verringert werden, um die Umformstrecke für die Folienbahn 2 zu verkürzen. Dann wird aus einer Umformlinie 24 eine veränderte Umformlinie 25.
- d: Abstand
- 1: vertikale Schlauchbeutelmaschine
- 2: Folienbahn
- 3: Abzug
- 4: Vorratsrolle
- 5: Formschulter
- 6: Füllrohr
- 7: Folienschlauch
- 8, 9: Schulterteil
- 10: Verstelleinrichtung
- 11: Transportrichtung
- 12: vertikale Achse
- 13: Folienrand
- 14: Leiste
- 15: Arretierungsteil
- 16: Riemen
- 17: Heißsiegelband
- 18: Längssiegeleinrichtung
- 19: Längsnaht
- 20: Quersiegelbacke
- 21: Quernaht
- 22: Trenneinrichtung
- 23: Folieneinlaufkante
- 24, 25: Umformlinie

## Patentansprüche

1. Formschulter zur Umformung einer ebenen, von einer Vorratsrolle (4) abgewickelten Folienbahn (2) zu einem Folienschlauch (7), **dadurch gekennzeichnet, dass** die Formschulter (5) zwei separate Schulterteile (8, 9) zum Aufnehmen der Folienbahn (2) aufweist, und dass eine Verstelleinrichtung (10) zum Verändern und Fixieren eines Abstandes (d) zwischen den Schulterteilen (8, 9) vorgesehen ist.

2. Formschulter nach Anspruch 1, **dadurch gekennzeichnet, dass** das eine Schulterteil (8) ein Einlaufteil und das andere Schulterteil (9) ein die aufeinander liegenden Folienränder (13) an den Folienschlauch (7) abgebendes Auslaufteil ist.

3. Formschulter nach Anspruch 1 oder Anspruch 2, **dadurch gekennzeichnet, dass** die Verstelleinrichtung (10) eine Leiste (14) aufweist, entlang der ein mit einem Schulterteil (8, 9) verbundenes Arretierungsteil (15) feststellbar ist.

4. Formschulter nach Anspruch 3, **dadurch gekennzeichnet, dass** die Leiste (14) gerade ist.

5. Formschulter nach Anspruch 3, **dadurch gekennzeichnet, dass** die Leiste (14) eine Kurvenbahn beschreibt.

6. Formschulter nach einem der Ansprüche 1 bis 5, **dadurch gekennzeichnet, dass** mindestens ein Schulterteil (8, 9) in eine in Transportrichtung des Folienschlauches (7) ausgerichtete Achse (12) versetzbar und in einer versetzten Position arretierbar ist.

7. Formschulter nach Anspruch 1, **dadurch gekennzeichnet, dass** das eine Schulterteil (8) eine plane, konisch zulaufende Einlaufebene mit einer geraden Folieneinlaufkante (23) und das andere Schulterteil (9) eine ebene Dreiecksfläche aufweist.

8. Formschulter nach einem der Ansprüche 1 bis 7, **dadurch gekennzeichnet, dass** die Formschulter Teil einer vertikalen Schlauchbeutelmaschine (1) ist.
